# EUROPEAN PATENT SPECIFICATION

(11) **EP 4 612 474 B1**
(45) Date of publication and mention of the grant of the patent: **29.04.2026**
(21) Application number: 23809299.3
(22) Date of filing: 02.11.2023
(51) Int. Cl.: G01N 1/06

(54) **EQUIPMENT TO RECOGNISE THE END OF THE TRIMMING PHASE OF A BIOLOGICAL TISSUE INCLUDED WITHIN A BLOCK OF CONTAINMENT MATERIAL**
VORRICHTUNG ZUR ERKENNUNG DES ENDES DER TRIMMPHASE EINES BIOLOGISCHEN GEWEBES IN EINEM BLOCK AUS EINSCHLUSSMATERIAL
ÉQUIPEMENT DE RECONNAISSANCE DE FIN DE PHASE DE DÉCOUPE DE TISSU BIOLOGIQUE INCLUS DANS UN BLOC DE MATÉRIAU DE CONFINEMENT

(30) Priority: 03.11.2022 IT 202200022599
(43) Date of publication of application: 10.09.2025
(73) Proprietor: Inpeco SA, 6883 Novazzano (CH)
(72) Inventor: GUACHI-GUACHI, Lorena, 56127 Pisa (IT); VANNOZZI, Lorenzo, 56127 Pisa (IT); CIANCIA, Sabrina, 56127 Pisa (IT); RUSPI, Jacopo, 56127 Pisa (IT); BALDI, Gabriele, 56127 Pisa (IT); SCARLINO, Paola, 56127 Pisa (IT); LUNNI, Dario, 56127 Pisa (IT); POLIZIANI, Aliria, 56127 Pisa (IT); RICOTTI, Leonardo, 56127 Pisa (IT); BELLINI, Marco, 6883 Novazzano (CH); ZUCCA, Alessandra, 6883 Novazzano (CH); PEDRAZZINI, Gianandrea, 6883 Novazzano (CH); CAVAZZANA, Andrea, 56121 Pisa (IT)
(74) Representative: Buzzi, Notaro & Antonielli d'Oulx S.p.A.
(86) International application number: PCT/IB2023/061030
(87) International publication number: WO 2024/095191

(56) References cited:
- EP-A1- 3 435 071
- WO-A1-2021/168457
- WO-A1-93/05936
- JP-B2- 4 840 765

## Description

### Field of the invention

With reference to the field of anatomical pathology, the present invention relates generally to an apparatus for processing in an automated way a biological tissue embedded within a block of containment material.

More particularly, the present invention relates to an apparatus and a related process for the automatic recognition of the end of the trimming step of a biological tissue embedded within a block of containment material.

### Prior art

Anatomical pathology is the branch of medicine that analyzes the structure of human tissues to reveal anomalies, thus supporting doctors in the correct diagnosis and management of patient therapy. Anatomopathologists are able to identify and diagnose diseases by examining a piece of tissue, previously processed so that it can be viewed in section on a slide, through an optical microscope.

Currently, more than 90% of the tests performed in an anatomical pathology laboratory are directed towards the diagnosis of cancer. Global incidence of cancer is dramatically increasing, so, by 2040, the number of new cancer cases per year is expected to rise to 29.5 million. This prediction drives the need for more tissue-based diagnostic services, and optimization of processes for the future. Indeed, the procedures carried out in anatomical pathology laboratories are characterized by a wide range of variables (e.g. sample type, container variability, presence of many different analytical processes, etc.). As a result, processes are inherently prone to errors, which can have even serious clinical consequences.

The standard workflow performed in an anatomical pathology laboratory begins with the collection of the tissue to be analyzed from the patient, and ends with the doctor's diagnosis following microscopic inspection of a tissue section placed on a slide. This cycle is conventionally organized into the pre-analytical, intra-analytical, and post-analytical steps.

The pre-analytical step consists in the handling and pre-treatment of tissue samples that must be sent to the anatomical pathology laboratory. In this step, tissue is surgically removed from the body through biopsy and transferred to the laboratory for histopathological examination. In the laboratory, samples are sorted and labeled to associate each of them with a unique specific case number. Labeling is necessary to ensure a unique match between the tissue received in the laboratory and the corresponding container used during each step of the following process (e.g. tissue container, histology cassette, and slide).

The intra-analytical step can be divided into five distinct sub-steps: grossing, processing, embedding, sectioning, and staining-coverslipping.

Grossing consists of a macroscopic visual examination of the sample. During this step, the anatomopathologist records all the details of the tissue/organ under examination, that might be useful for diagnosis (e.g. tissue type, color, size, weight, consistency and presence of mucus or blood). Then, the sample is cut into a number of small pieces no thicker than 3-4 mm, placed in respective histology cassettes, appropriately labeled. Then, the cut samples placed in the histology cassettes undergo the processing step. Here, the samples are dehydrated and the water is replaced with a medium mixable with the substances used for embedding. After this step, the tissue contains ethanol, which cannot be mixed with paraffin (i.e. the substance used in the embedding step). Therefore, ethanol is replaced with an intermediate solvent (usually xylene or toluene), which is mixable with both ethanol and paraffin.

After processing, the samples undergo the embedding step. During this step, the tissue is immersed in paraffin, a mixture of high-molecular-weight saturated hydrocarbons that is insoluble both in water and ethanol. At room temperature paraffin is solid, while at temperatures above the melting point (56-62 °C) it undergoes a transition to the liquid phase. The steps of incorporation are: (i) liquid paraffin is maintained at the melting temperature in a dispenser; (ii) the tissue is pressed towards the bottom surface of a metal mold by means of a clamp and properly oriented so that the area of tissue to be uncovered faces the bottom; (iii) the melted paraffin is poured inside the mold; (iv) the mold is covered with the bottom of a histology cassette (the same one used for that tissue in the grossing and processing steps); (v) additional melted paraffin is poured onto the mold to join the cassette to the paraffin-embedded tissue block; (vi) the paraffin block is transferred to a cold plate to solidify paraffin. Finally, (vii) the mold is removed in order to obtain the paraffin block with embedded tissue adhered to the cassette, which is used as a support. This procedure aims to give support to the tissue that reaches a suitable hardness to be sectioned, preventing distortion of the tissue during cutting and preserving the tissue for long-term storage.

Once the block of containment material (typically paraffin) has been obtained, the material is ready to be processed and cut into very thin slices a few microns thick, each of these slices comprising a portion of biological tissue surrounded by containment material. Some of the cut slices including biological material are later analyzed using a microscope.

According to a per se known technique, the cutting operation is performed by means of a dedicated instrument called microtome, equipped with a blade that can be operated by means of a crank mechanism. The microtome allows to obtain individual slices of biological material of a predetermined thickness, which can be modified by acting on mechanical adjustments of the microtome itself. In operation, the block of containment material is mechanically clamped within a block-holding element of the microtome, which can be rotated by means of a crank handled by an operator. The blade, on the contrary, is fixed on a special housing below the block-holding element. Once the blade is aligned with the surface of the block, the rotation of the crank allows the blade and the block to be brought into contact, and to proceed with a transverse cut of the block, according to a per se known mechanism.

On the other hand, there are microtomes in which, following the input of certain setting parameters (e.g. the thickness of the slices or the frequency of the blade movement), the cut is carried out in an automated manner, through the use of a control panel.

In a first step of this cutting operation, the microtome only removes the containment material (paraffin) as the biological tissue is embedded within the block and the blade has not yet come into contact with it. Therefore, after an initial cutting step, called trimming, a succession of thin slices consisting only of waste material are obtained. Consequently, this waste material must be removed so as to not interfere with the biological material later cut.

The trimming step ends when the biological tissue embedded within the block of containment material is uncovered from the containment layer formed by the paraffin: thus a second cutting step called sectioning begins, in which a succession of slices including biological material surrounded by containment material are made. The individual slices then comprise a central portion of biological material "drowned" within a peripheral portion of containment material.

According to a per se known procedure, the biological tissue sections are manually transferred by an operator using tweezers, brushes or directly with the fingers into a hot water bath at approximately 38-40°. This step is essential to stretch the paraffin-embedded tissue sections and to remove all folds formed during the cutting step. Then, the sections are collected on a slide and left to dry to completely evaporate the water.

The next step is staining, which ensures that the tissue can be studied with an optical microscope by staining specific cell or tissue components. As all tissues are decolorized by the processing procedure, specific staining protocols are required to view the different cellular components. Hematoxylin/eosin staining is one of the most common ones applied in anatomical pathology laboratories. Since the dyes are generally dissolved in water or aqueous solutions, while paraffin sections are hydrophobic, the first step of staining is the so called "deparaffinization", which removes the paraffin on the slide by heating it at 65-75° C for about 10 minutes. Then, the slides are treated with ethanol and xylene at different concentrations and finally washed with distilled water before being immersed in the staining solution (a few minutes per step for a total of about 30 minutes). After staining, a coverslip is applied to the sample to preserve the tissue over time. This step is referred to as coverslipping. The coverslip is adhered to the sample holding slide using natural or synthetic resins. Although recently, just in the staining step, tools have been introduced that allow to proceed with standardized protocols, all these processes are typically dependent on the operator (technicians, anatomopathologists or both).

Finally, the post-analytical step consists in the examination of the slide with the optical microscope by the anatomopathologist. The transcription activities for drafting explanatory reports represent steps with a relatively high probability of making mistakes. Until the 1990s, case examination and decision-making processes were completely dependent on the anatomopathologist. The recent introduction of automation in this step led to the entry of laboratory orders by means of electronic management programs, including voice recognition systems, which enable the automatic creation of reports which helped to increase the efficiency of laboratories.

To date, a considerable number of human errors and artifacts affect the process in all its steps (pre-analytical, intra-analytical and post-analytical), mainly due to manual and non-standardized procedures.

In particular, post-analytical errors refer to the previous steps because an incorrect report delivery is a direct consequence of errors that occurred during the previous processes. This is the most critical part because the errors accumulated up to this step influence the diagnosis, and consequently the therapy the patient should follow. It should be considered that even a simple labelling error could lead to a false positive cancer diagnosis. Furthermore, it should be considered that histology laboratories are generally under constant pressure: given the ever increasing analysis cases, they are asked to process an increasing number of samples while maintaining the highest quality of service.

With regard to human errors and artifacts, specifically artifacts refer to any kind of alteration of the sample as a result of an error in the procedure. These artifacts are therefore an unavoidable consequence of human operations and represent a crucial factor in risk management protocols.

Human errors can instead be classified according to their location. In the pre-analytical step, the most common errors relate to patient identification, sample collection, sample exchange and laboratory access errors. In the intra-analytical step, common sources of artifacts are due to incorrect block cutting, or possible cross-contamination due to the collection of multiple tissues in a slice-stretching bath, or the collection of tissues with slides marked with an incorrect QR code. Incorrect cutting of the block can be caused by over-extending the trimming step, thus removing both surface waste material and also material with tissue contained within. This type of error is particularly critical, considering that if too much tissue useful for analysis is mistakenly removed, the sample will be excessively consumed and unusable for cutting further sections for later analysis. In addition to aspects purely related to the manual skill and experience of the technician, other important sources of error are linked with possible cross-contamination between different samples, or incorrect labelling or handling of the sample due to the need to change the container/support during the process (switching from a cassette to a slide in the microtomy step), which undermine the traceability of the tissues themselves in the various steps of the process. It is extremely necessary to ensure a match between all containers related to a single case to guarantee sample traceability. Post-analytical errors refer to the previous steps because an incorrect report delivery is a direct consequence of errors that occurred during previous processes. As mentioned above, this is the most critical part because errors accumulated up to this step would affect the therapy that the patient should follow.

Even the trimming step is not without its drawbacks, both from the point of view of the execution of the trimming itself and from the point of view of the decision to stop at the correct point, realizing that the sectioning of the biological material has started. The manually performed process takes a relatively long time (in the range of 45-60 seconds) and is subject to a great variability of interpretation by the operator, since each operator judges the right point at which to stop with the trimming operation, based on his/her personal experience, sometimes stopping the trimming operation for a temporary check, thus contributing to extend the execution time of the process. The operator should stop cutting operations before beginning tissue sectioning to determine whether the paraffin embedded tissue has been completely uncovered, so that the microtome can be set to a specific setting for sectioning, different from that used for trimming. Furthermore, it is important to notice as quickly as possible when the end of the trimming step is reached both to speed up the procedure and to avoid excessively cutting the sample and thus losing useful tissue for later analysis. Regarding the microtome settings for the trimming and sectioning steps, the former is usually carried out by setting cuts of 10-30 µm at each cycle, in order to

quickly remove waste material and move on to the sectioning step, while the latter involves a cutting thickness usually between 0.5 and 10 µm in order to cut thin slices and avoid viewing too thick tissue layers on the microscope slide. Another parameter of the microtome that varies between trimming and sectioning is the cutting speed, and consequently also the accuracy of the cut. In the trimming step, cutting usually takes place very quickly to speed up the procedure, with the operator occasionally visually checking the state of the block when he/she believes to be close to the tissue uncovering step, stopping the procedure and pulling the block out of the microtome to see it in light contrast. For this reason, the automatic cutting mode is often used in trimming because it turns out to be an operation that does not require excessive inspection accuracy, at least at the initial block trimming stage, when the operator is sure to remove only paraffin. In the sectioning step, the cutting must be much more accurate given the low thickness of the slice, so the operator manually adjusts the cutting speed to avoid breaking or shattering the cut thin slice.

In this context, some automation technologies have been introduced in an attempt to make the process more efficient and reduce errors. Document WO2021168457 describes a solution to automatically acquire information on the thickness of the tissue and the containment material to automate the trimming step, **according to the preamble of claim 1.** Document KR20130066280 describes a trimming platform, based on a servo system connected with a waste removal system. Document WO2022087443 describes a solution for analyzing obtained tissue sections, in order to detect any anomalies and then decide whether it is necessary to cut further tissue portions.

However, the solutions described in these documents are not fully satisfying in several aspects, particularly in terms of the efficiency of the automation of the trimming step. Therefore, the need arises to propose an innovative solution in this regard, as much as possible released from manual operations and decision-making by an operator.

### Object of the invention

It is the object of the present invention to solve the aforementioned problems.

In particular, it is an object of the present invention to implement an apparatus of the type indicated at the beginning of this description, without the need for manual intervention by an operator, which is constructively simple, functional, and with high flexibility of use.

A further object of the invention is to provide an automated process which is reliable, fast and repeatable over time, by means of simple and intuitive operations.

A further object of the invention is to carry out an apparatus and process of the above type that has an extremely high degree of safety against the risk of process anomalies, for example regarding the cutting of containment material.

Still a further object of the invention is to achieve all of the above purposes with relatively simple and low-cost means.

### Summary of the invention

In view of achieving one or more of the aforementioned objects, the invention relates to an apparatus as defined in claim 1 and a process as defined in claim 17.

Further advantageous features of the invention are defined in the appended dependent claims and description below.

### Brief description of figures

Further features and advantages of the invention will result from the following description with reference to the appended drawings, provided purely by way of non-limiting example, in which:
- Figure 1 is a schematic perspective view of an apparatus according to a preferred embodiment of the invention,
- Figure 2 is a partially exploded schematic perspective view, illustrating the apparatus of Figure 1,
- Figure 3 is a schematic side view, illustrating the apparatus of the previous figures, and
- figure 4 is an enlarged scale view illustrating some components of the apparatus according to the invention.

### Description of multiple embodiments

The following description illustrates various specific details aimed at a deep understanding of examples of one or more embodiments. Embodiments may be realized without one or more of the specific details, or with other methods, components, materials, etc. In other cases, known structures, materials or operations are not shown or described in detail to avoid obscuring various aspects of the embodiments. Reference to "an embodiment" within this description indicates that a particular configuration, structure or feature described according to the embodiment is included in at least one embodiment. Thus, sentences such as "in an embodiment", possibly occurring in different points in this description, do not necessarily refer to the same embodiment. In addition, particular conformations, structures or features may be appropriately combined in one or more embodiments and/or associated to the embodiments in a different way than illustrated here, so that for example a feature exemplified here according to a figure may be applied to one or more embodiments exemplified in a different figure.

References illustrated herein are for convenience only and therefore do not limit the scope of protection or the extent of the embodiments.

In the appended drawings, reference 1 indicates as a whole an apparatus for processing in an automated way a biological tissue embedded within a block of containment material, in particular for automatically recognizing the end of the trimming step of a biological tissue embedded within a block of containment material (e.g. paraffin).

Some construction details of the apparatus 1 are not illustrated in the appended drawings, as they can be implemented according to widely known techniques in the relevant technical field.

It should be noted that the embodiments illustrated in the drawings constitute only examples of implementation realized according to the present invention, since the principles underlying the present invention are generally applicable to any apparatus incorporating the peculiar features disclosed in the appended claims.

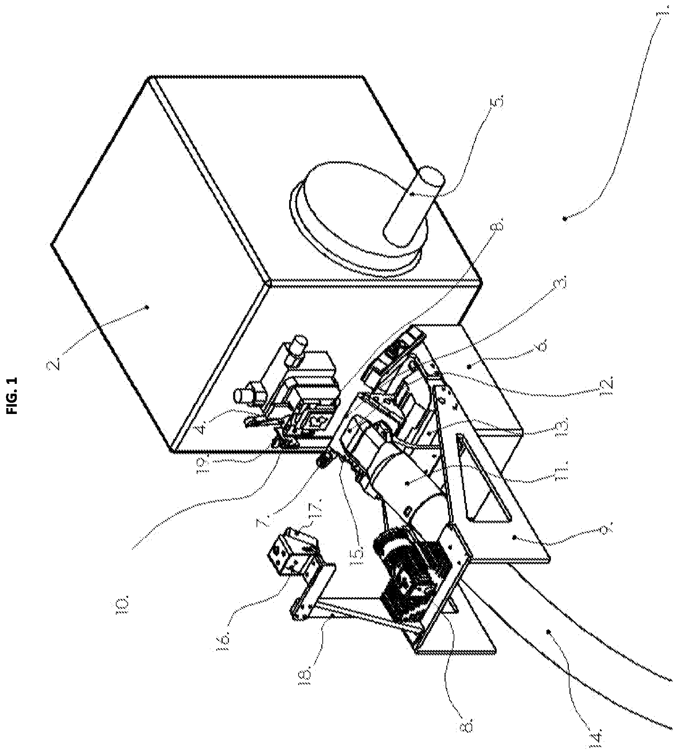

With reference to Figure 1, the apparatus 1 includes an instrument 2 provided with a cutting element 3 arranged to section a biological tissue embedded within a block of containment material B and make a plurality of slice portions containing biological tissue. In accordance with a per se known technique, the instrument 2 is a microtome provided with a support element 4 arranged to lock in place the block of containment material B, which in standard practice consists of paraffin. The cutting element 3, made in the form of a blade, is positioned frontally with respect to the support element 4 and eventually has an inclined plane able to guide generated slice portions towards a desired direction. Cutting element 3 is supported by a blade holder body 13. The cut can be manually performed by actuating a crank device 5. In other embodiments, the cut of the block of containment material B containing biological tissue is performed in an automated way following the input of certain setting parameters (e.g. the thickness of slices or the frequency of blade movement).

In one or more embodiments, the operation of inserting the block of containment material B on the support element 4 is performed automatically by a multi-axis manipulator robot of any known type.

The above cutting operation results in very thin slices a few microns thick, each of these slices thus comprising a portion of biological tissue surrounded by containment material. Individual slices of biological material are particularly suitable for following processing, up to the microscopic analysis of the biological tissue contained in each slice. In a first step of the aforementioned cutting operation, called trimming, the microtome removes only containment material B (paraffin) because the biological tissue is embedded internally within block B and the blade has not yet come into contact with it. Therefore, after an initial cutting step, a plurality of thin slices consisting only of containment material are obtained. Consequently, these slices only constitute waste material that must be disposed of in order to avoid contaminating the later cut biological material to be analyzed.

As it is clear from the following description, the apparatus 1 according to the present invention is configured to automate the trimming process, both from the point of view of performing the trimming itself, and from the point of view of having to promptly detect that the trimming step is finished, allowing the process to be performed in a short time, without errors, and eliminating the subjective variability of an operator. According to a process subject to personal interpretation, the operator must stop cutting operations before beginning tissue sectioning to determine whether the paraffin-embedded tissue has been completely uncovered, so that the microtome can be set to a specific setting for sectioning, different from that used for trimming. In addition, it is important to notice the end of trimming as quickly as possible both to speed up the procedure and to avoid excessively cutting the sample and thus losing tissue useful for later analysis. Regarding the microtome settings for trimming and sectioning steps, the former is usually carried out by setting cuts of 10-30 µm at each cycle, in order to quickly remove waste material and move on to the sectioning step, while the latter involves a cutting thickness usually between 0.5 and 10 µm, in order to cut thin slices and avoid displaying too thick layers of tissue on the microscope slide. Another microtome parameter that varies between trimming and sectioning is the cutting speed, and consequently also the accuracy of the cut. In the trimming step, cutting usually occurs very quickly to speed up the procedure, with the operator occasionally visually checking the state of the block when he/she believes to be close to the tissue uncovering step, stopping the procedure and pulling the block out of the microtome to see it in light contrast. For this reason, the automatic cutting mode is often used in trimming because it turns out to be an operation that does not require excessive inspection accuracy, at least at the initial block trimming stage, when the operator is sure to remove only paraffin. In the sectioning step, the cutting must be much more accurate given the low thickness of the slice, so the operator manually adjusts the cutting speed to avoid breaking or shattering the cut thin slice.

Returning to the illustrated embodiment, it should be noted that the apparatus 1 comprises a microtome hooking portion 6 arranged to hook different types of microtomes, so that it is compatible with different types of microtomes. As shown in the drawings, the blade holder body 13 is fixed above the microtome hooking portion 6. The blade holder body 13 engages on the hooking portion 6 by means of a mechanical locking system with mutual coupling on directional guides. The mechanism is operable by means of a lever carried by the hooking portion 6, so as to allow the release of the blade holder body 13.

According to a first feature of the invention, the apparatus 1 comprises a photoelectric proximity sensor 7 arranged to detect if the block of containment material B is at a proximal distance with respect to the cutting element 3, in particular smaller than 100 micrometers. The photoelectric proximity sensor 7 is also arranged to send a digital confirmation signal in this regard. Thus, the proximity sensor 7 is arranged to detect the mutual distance between the cutting element 3 and the block of containment material B. Sensor 7 allows the operator - and eventually an operation control device - to receive an acknowledgement signal as soon as the block of containment material B is in proximity of the cutting element 3, thus not being necessary to rely on his visual perception or on the presence of the operator. According to the illustrated embodiment, the proximity sensor 7 is mounted on the blade holder body 13, so that it is adjacent to the cutting element 3.

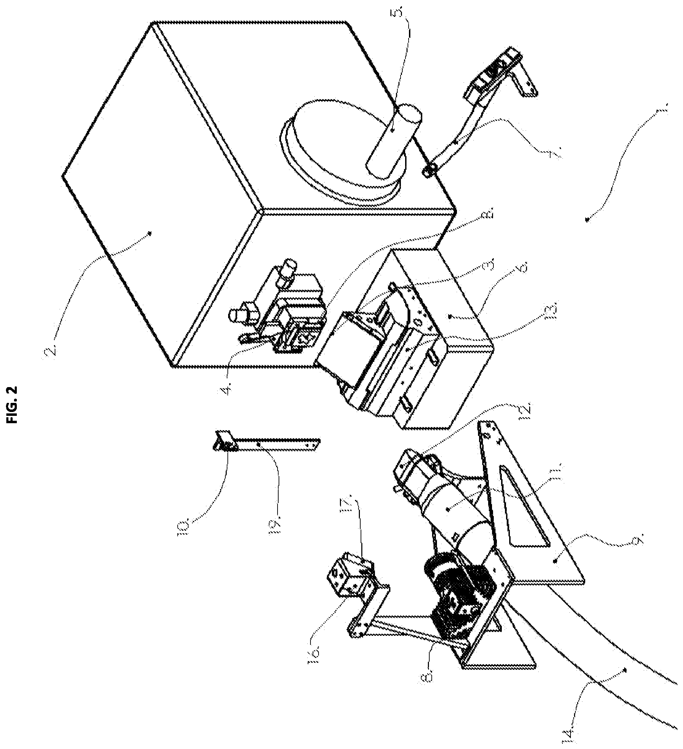

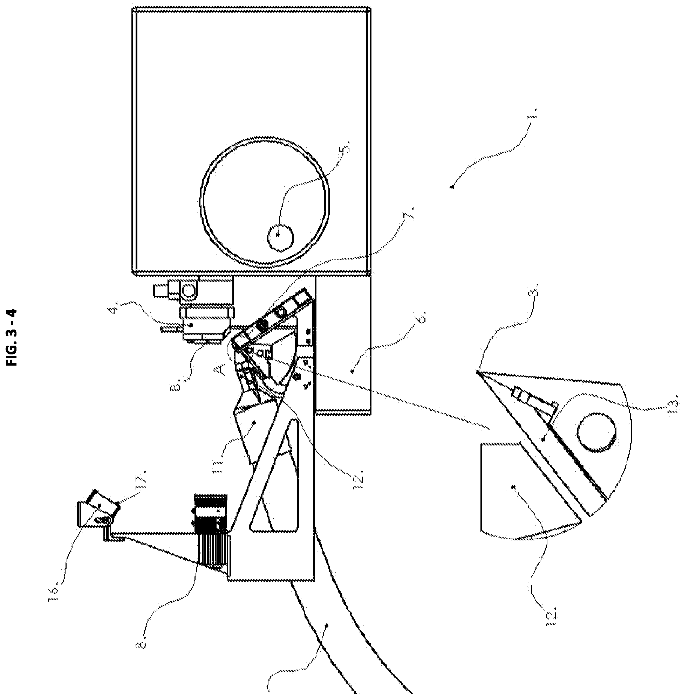

The apparatus 1 also comprises at least one camera 8 arranged to acquire a plurality of images related to the state of the block of containment material B, during the cutting operations. In one or more embodiments, as well as in the one illustrated in Figures 1-3, the camera 8 is positioned frontally with respect to the support element 4 of the block of containment material B, in order to frontally frame the block B during the process. Preferably, camera 8 is configured to capture at least five images per second (fps), ensure a resolution of at least two megapixels, and have a frame capture rate greater than what is the time-cycle at maximum speed of the microtome (0.39 milliseconds, equivalent to speed 10 with reference to microtome model HistoCore Autocut, Leica). Camera 8 is equipped with a lens so that the acquisition can be focused on the surface of the block of containment material B. In addition, still with reference to a preferred embodiment (see Figure 1), camera 8 is mounted above a support portion 9 provided with a heat sink to allow operation of the image acquisition system over the long term, preventing unwanted heating of the camera 8. The support portion 9 is rigidly connected to the microtome hooking portion 6 at a distal end with respect to the position of the camera 8, so that the camera 8 is positioned frontally at a predetermined fixed distance with respect to the microtome and the block of containment material B.

The apparatus 1 also comprises a Hall effect sensor 10 arranged to detect during the cutting cycle whenever the support element 4 of the block B is at a specific point relative to the cutting element 3 of the microtome. Simultaneously, the sensor 10 is arranged to send an activation signal to the camera 8 to acquire an image of the block B. Thus, the state of the block of containment material B can be continuously monitored throughout the cutting cycle by acquiring a plurality of consecutive images, each acquired after the cutting of a slice portion.

With reference to the illustrated embodiment, the Hall effect sensor 10 is carried by a support rod 19 coupled at a lower end with the blade holder body 13. The support rod 19 and the sensor 10 extend along one side of the support element 4 and the block B.

Preferably, the Hall effect sensor 10 is arranged at a given height with respect to the blade holder body 13, corresponding to the highest position of the cyclic trajectory of the support element 4, cyclically traveled during cutting, i.e. alongside the block B in the position in which it temporarily stops and changes direction of movement. The cutting trajectory then alternately repeats a bottom-up - and vice versa - movement of the block B and the support body 4. It should be noted that the present invention is likewise directed to an apparatus in which the block B supported by the support body 4 remains stationary, and it is the cutting element that travels a cyclic trajectory.

The signal received from the sensor 10 allows to trigger the acquisition of the image of the block B by the camera 8, which thus acquires an image of block B in the frontal position. As previously indicated, this process repeats for each cutting trajectory, after each slice portion is cut, so as to continuously monitor the state of the block B.

The apparatus 1 also comprises a cleaning device 11, including a nozzle 12 configured to remove waste of containment material generated during the cutting operations with the microtome.

In one or more embodiments, the nozzle 12 protrudes above the blade holder body 13 and is oriented towards the cutting element 3, facing the block of containment material B. The nozzle 12 is connected to an external vacuum line 14 to allow the removal in real time of the waste of containment material, during the cutting. According to the shown configuration, nozzle 12 is thus in a fixed position facing the cutting element 3, at a lower height than that of the camera 8 and the block B when in the highest position of its cyclic trajectory, so as not to interfere in terms of footprint with cutting and with the acquisition of the image. According to this configuration, the vacuum line 14 extends below the camera 8, within a central passage of the support portion 9. In one or more embodiments, the vacuum generated with the cleaning device 11 is sufficient to remove at least 34 mm³/second of paraffin, so the generated vacuum is at least 200 millibars. In one or more embodiments, the apparatus 1 further comprises a pressure sensor 15 associated with the nozzle 12, arranged to keep under control the cleaning process, evaluating that the generated vacuum remains constant and is not influenced by an undesirable accumulation of waste material in the vacuum line 14. The presence of such a cleaning device 11, arranged to act in real time during cutting by means of the microtome, allows to keep the entire apparatus 1 clean, avoid problems with image acquisition due to an excessive paraffin accumulation frontally to the camera 8, avoid cross-contamination with the blocks B which will be subsequently processed in sequence, assist if necessary also the work of the technician who in this way does not need to periodically clean the microtome from residues generated during the microtomy processes, and strongly limit the presence of paraffin residues that could be inhaled by operators and cause irritation.

In one or more embodiments, the apparatus 1 comprises a lighting system 16 associated with the camera 8, arranged to highlight the contours and shapes of the tissue embedded in the block B, in order to facilitate following processing of the images, as described below. In a preferred embodiment, the lighting system comprises a cold-source light source 17, capable of generating a light intensity of at least 10 klx on the block B. The light source 17 is placed above the camera without interfering with the field of view of the camera 8 itself. In this regard, the light source 17 can be cantilevered by a support arm 18 connected to the support portion 9 at a distal end with respect to the light source 17. Preferably, the emitted light is controllable in terms of brightness, thus allowing it to be adjusted, in correlation with the subsequent image processing described below.

In one or more embodiments, the apparatus 1 comprises a human-machine interface device (not illustrated) arranged to monitor and control the different steps of operation of the apparatus 1 by an operator. In one or more embodiments, the actuation of the microtome can be controlled through such an interface.

The apparatus 1 comprises an electronic processing and control group E configured to automatically control the components described above, particularly the photoelectric proximity sensor 7, the Hall effect sensor 10 (which activates the camera 8) and the cleaning device 11.

According to the present invention, the electronic processing and control group E is configured and programmed to:
- process in real time each image acquired by the camera 8, to check if there is still the trimming step such that the microtome cuts slice portions consisting only of containment material, or if there is already the sectioning step such that the cutting element 3 creates slice portions comprising biological material, and
- activate a stop signal to stop the cutting operations if the sectioning step is identified for at least two consecutive processed images.

As indicated above, stopping the cutting operations before proceeding with the sectioning step is useful both to avoid excessively cutting the sample and thus losing useful tissue for later analysis, and to vary microtome settings.

To carry out the above verification, the electronic processing and control group E is configured and programmed to implement automatic algorithms arranged to analyze the acquired digital image of the block of containment material B (e.g. by means of the U-Next-MobileNet V2 architecture). Such automatic analysis algorithms involve a step in which relevant parts of each image are identified, and portions of biological tissue of interest, referred to later as tissue regions, are placed in an analysis set. In fact, according to the process implemented through the above algorithms, the image is segmented and subjected to a post-processing step to remove noise and group pixels into components, identifying tissue regions subject to further processing. In one or more embodiments, the segmentation of tissue regions is based on a convolutional neural network for pixel segmentation of areas of interest which, after a learning step, has automatically learned the typical features of tissue regions.

Then, the digital image of the block B and each extracted tissue region are then processed in a next step called classification - via, for example, the EfficientNet-LiteO architecture - to check if there is the sectioning condition or if there is still the trimming condition. The sectioning condition is confirmed when both the previously segmented tissue region and the image of the block B are identified in the sectioning condition, otherwise the identified condition remains the trimming one. The prediction of sectioning and trimming are based on a convolutional neural network for classification that, following a learning step, has automatically learned the features that distinguish the sectioning and trimming conditions of the blocks B and the tissue regions.

Finally, as mentioned earlier, the electronic processing and control group E is configured and programmed to activate a stop signal to stop the cutting operations if the sectioning condition is finally confirmed for at least two consecutive processed images.

In a preferred embodiment, the electronic processing and control group E comprises:
- a microcontroller arranged to manage signals from sensors 7,10;
- a central processing unit arranged to process the images acquired through the algorithms described above and to alert the microcontroller to stop cutting operations.

The present invention is also directed to a process implemented by means of the apparatus 1 previously described. The process can be fully automated even in the steps preceding the detection of the end of the trimming step. Indeed, as already indicated, the block B can be automatically inserted on the support body 4 by means of a multi-axis manipulator robot of any known type, and the cutting operations to section the block B can be completely automated.

In one or more embodiments, the process comprises the following steps:
- automatically starting the cutting operations of the block B,
- detecting the position of the support element 4 bearing the block B,
- sending an activation signal of the camera 8 to acquire an image after cutting each slice portion, in order to continuously monitor the state of the block of containment material (B) by acquiring a plurality of consecutive images, each after the cutting of a slice portion,
- removing in real time waste of containment material generated during the cutting operations, while the consecutive images are acquired,
- processing in real time each acquired image to check if there is a trimming condition, such that the microtome cuts slice portions consisting only of containment material or if there is a sectioning condition of biological tissue, such that the cutting element 3 comes into contact with the biological tissue embedded within the block B creating slice portions comprising portions of biological tissue,
- activating a stop signal to automatically stop the sectioning operations if the sectioning condition has been identified for at least two consecutive processed images.

Thanks to the above features, the apparatus 1 according to the invention achieves a number of important advantages, including:
- standardization of the trimming process by removing operator subjectivity,
- reduction of possible errors during diagnosis step due to non-optimal trimming,
- reduction of process time, without altering or interrupting the workflow in anatomical pathology laboratories, and
- prompt detection of the end of the trimming step, before starting the sectioning step.

Naturally, without prejudice to the principle of the invention, the construction details and the embodiments may vary widely with respect to what is described and illustrated purely by way of example, without thereby departing from the scope of the present invention as defined by the appended claims.

## Claims

1. Apparatus (1) for processing in an automated way a biological tissue embedded within a block of containment material (B), in particular for automatically recognizing the end of a trimming step of said biological tissue embedded within said block of containment material (B), wherein said apparatus (1) comprises:
- an instrument (2) provided with a cutting element (3), particularly a microtome arranged to section the biological tissue embedded within the block of containment material (B) and make slice portions of said biological tissue, wherein said microtome comprises a support element (4) for locking in place the block (B) to be sectioned, wherein said support element (4) is movable with respect to the cutting element (3) according to a cyclic trajectory to form a plurality of said slice portions,
- at least one camera (8) arranged to acquire a plurality of images related to the state of the block of containment material (B) during the cutting operations,
- at least one sensor (10) arranged to detect the position of said support element (4) or of said cutting element (3) with respect to the other during of the cyclic trajectory, and to send an activation signal of the camera (8) to acquire an image after the cutting of each slice portion, so as to continuously monitor the state of the block of containment material (B) acquiring a plurality of consecutive images, each one after the cutting of a slice portion,
- an electronic processing and control group (E) configured to automatically control said at least one sensor (10) able to activate the camera (8),
- said electronic processing and control group (E) being configured and programmed to:
- process in real time each acquired image to check if there is a trimming condition, such that the microtome cuts slice portions consisting only of containment material or if there is a sectioning condition of biological tissue, such that the cutting element (3) comes into contact with the biological tissue embedded within the block (B) creating slice portions comprising portions of biological tissue,
- activating a stop signal to automatically stop the sectioning operations if the sectioning condition has been identified for at least two consecutive processed images,
**characterized in that**:
- the apparatus (1) comprises a microtome hooking portion (6) above which a blade holder body (13) carrying said cutting element (3) is fixed, wherein said microtome hooking portion (6) is arranged to hook different types of microtomes,
- the apparatus (1) further comprises a cleaning device (11) having a nozzle (12) configured to remove in real time waste of containment material generated during the cutting operations, while the consecutive images are acquired, without interfering with the field of view of the camera (8),
- the electronic processing and control group (E) is also configured to automatically control said cleaning device (11),
- the nozzle (12) protrudes above the blade holder body (13) and is oriented towards the cutting element (3), facing the block of containment material (B),
- the nozzle (12) is thus in a fixed position facing the cutting element (3), at a lower height than that of the camera (8) and the block (B) when in the highest position of its cyclic trajectory, so as not to interfere in terms of footprint with cutting and with the acquisition of the image.

2. Apparatus (1) according to claim 1, wherein the cutting element (3) comprises an inclined plane positioned frontally with respect to the support element (4), able to guide the cut slice portions towards a desired direction.

3. Apparatus (1) according to claim 1 or 2, comprising a multi-axis manipulator robot for automating the operation of inserting the block of containment material (B) on the support element (4).

4. Apparatus (1) according to any one of the preceding claims, comprising a photoelectric proximity sensor (7) arranged to detect if the block of containment material (B) is at a proximal distance with respect to the cutting element (3), in particular smaller than 100 micrometers, and to send a digital confirmation signal about this.

5. Apparatus (1) according to claim 1, wherein said camera (8) is mounted above a support portion (9) provided with a heat sink to prevent unwanted heating of the camera (8).

6. Apparatus (1) according to claim 5, wherein said support portion (9) is rigidly connected to the microtome hooking portion (6) at a distal end with respect to the position of the camera (8), so that the camera (8) is positioned frontally at a predetermined fixed distance with respect to the microtome and the block of containment material (B).

7. Apparatus (1) according to claim 1 or 5 or 6, wherein said sensor (10) is carried by a support rod (19) coupled at a lower end with the blade holder body (13), wherein the support rod (19) and the sensor (10) extend along one side of the support member (4) and the block (B).

8. Apparatus (1) according to any one of the preceding claims, wherein said support element (4) is arranged to perform a cyclic cutting trajectory from bottom to top and vice versa, wherein the sensor (10) is arranged at a given height corresponding to the highest position of the cyclic trajectory of the support element (4).

9. Apparatus (1) according to any one of the preceding claims, wherein the nozzle (12) is oriented towards the cutting element (3), facing the block of containment material (B), and is connected to an external vacuum line (14) to allow the removal in real time of the waste of containment material, during the cutting.

10. Apparatus (1) according to claim 9, comprising a pressure sensor (15) associated with the nozzle (12), arranged to evaluate that the generated vacuum remains constant and is not influenced by an accumulation of waste material in the vacuum line (14).

11. Apparatus (1) according to claim 5, comprising a lighting system (16) associated with the camera (8), arranged to highlight the contours and shapes of the tissue embedded in the block (B), in order to facilitate following processing of the acquired images.

12. Apparatus (1) according to claim 11, wherein the lighting system (16) comprises a light source (17) cantilevered by a support arm (18) connected to the support portion (9) at a distal end with respect to the light source (17).

13. Apparatus (1) according to any one of the preceding claims, comprising a human-machine interface device arranged to monitor and control different operating steps of the apparatus (1).

14. Apparatus (1) according to any one of the preceding claims, wherein said electronic processing and control group (E) is configured and programmed to perform automatic algorithms able to analyze the acquired digital image of the block of containment material (B).

15. Apparatus (1) according to claim 14, wherein said automatic algorithms are configured to perform the step of segmenting relevant parts of each image, and to place portions of biological tissue of interest in an analysis set.

16. Apparatus (1) according to claim 15, wherein said automatic algorithms are configured to process the digital image of the block (B) and each extracted tissue portion, to check if there is the sectioning condition or if there is still the trimming condition, wherein the identification of the sectioning and trimming are based on a convolutional neural network for classification, arranged to learn the features that distinguish the sectioning and trimming conditions of the blocks.

17. Process for processing in an automated way a biological tissue embedded within a block of containment material (B), in particular for automatically recognizing the end of the trimming step, said process comprising the following steps:
- providing an apparatus (1) according to any one of the preceding claims,
- acquiring a plurality of images by means of said camera (8) related to the state of the block of containment material (8) during the cutting operations, each image being acquired after the cutting of a slice portion,
- removing in real time waste of containment material generated during the cutting operations, while the consecutive images are acquired,
- processing in real time each acquired image to check if there is a trimming condition, such that the microtome cuts slice portions consisting only of containment material or if there is a sectioning condition of biological tissue, such that the cutting element (3) comes into contact with the biological tissue embedded within the block (B) creating slice portions comprising portions of biological tissue,
- activating a stop signal to automatically stop the sectioning operations if the sectioning condition has been identified for at least two consecutive processed images.

18. Process according to claim 17, wherein the step of processing in real time each image comprises:
- segmenting relevant parts of each image and placing portions of biological tissue of interest in an analysis set,
- processing the digital image of the block (B) and each extracted tissue portion, to check if there is the sectioning condition or if there is still the trimming condition, wherein the identification of the sectioning and trimming are based on a convolutional neural network for classification, arranged to learn the features that distinguish the sectioning and trimming conditions of the block (B).

## Patentansprüche

1. Vorrichtung (1) zur automatisierten Verarbeitung eines in einem Block aus Einbettmaterial (B) eingebetteten biologischen Gewebes, insbesondere zur automatischen Erkennung des Endes eines Trimmvorgangs des in dem Block aus Einbettmaterial (B) eingebetteten biologischen Gewebes, wobei die Vorrichtung (1) umfasst:
- ein Instrument (2) mit einem Schneidelement (3), insbesondere ein Mikrotom, das angeordnet ist, um das in dem Block aus Einbettmaterial (B) eingebettete biologische Gewebe zu schneiden und Schnittabschnitte des biologischen Gewebes herzustellen, wobei das Mikrotom ein Halteelement (4) zum Fixieren des zu schneidenden Blocks (B) umfasst, wobei das Halteelement (4) in Bezug auf das Schneidelement (3) gemäß einer zyklischen Trajektorie beweglich ist, um eine Vielzahl der Schnittabschnitte zu bilden,
- mindestens eine Kamera (8), die angeordnet ist, um eine Vielzahl von Bildern bezüglich des Zustands des Blocks aus Einbettmaterial (B) während der Schneidvorgänge aufzunehmen,
- mindestens einen Sensor (10), der angeordnet ist, um die Position des Halteelements (4) oder des Schneidelements (3) in Bezug auf das andere während der zyklischen Trajektorie zu erfassen und ein Aktivierungssignal der Kamera (8) zum Aufnehmen eines Bildes nach dem Schneiden jedes Schnittabschnitts zu senden, um so kontinuierlich den Zustand des Blocks aus Einbettmaterial (B) zu überwachen, indem eine Vielzahl aufeinanderfolgender Bilder aufgenommen wird, jeweils eines nach dem Schneiden eines Schnittabschnitts,
- eine elektronische Verarbeitungs- und Steuergruppe (E), die konfiguriert ist, um den mindestens einen Sensor (10), der die Kamera (8) aktivieren kann, automatisch zu steuern,
- wobei die elektronische Verarbeitungs- und Steuergruppe (E) konfiguriert und programmiert ist, um:
- jedes aufgenommene Bild in Echtzeit zu verarbeiten, um zu prüfen, ob eine Trimming-Bedingung vorliegt, sodass das Mikrotom Schnittabschnitte schneidet, die nur aus Einbettmaterial bestehen, oder ob eine Schnittbedingung für biologisches Gewebe vorliegt, sodass das Schneidelement (3) mit dem in dem Block (B) eingebetteten biologischen Gewebe in Kontakt kommt und Schnittabschnitte erzeugt, die Abschnitte biologischen Gewebes umfassen,
- ein Stoppsignal zu aktivieren, um die Schnittvorgänge automatisch zu stoppen, wenn die Schnittbedingung für mindestens zwei aufeinanderfolgende verarbeitete Bilder identifiziert wurde,
**dadurch gekennzeichnet, dass**:
- die Vorrichtung (1) einen Mikrotom-Einhängeabschnitt (6) umfasst, oberhalb dessen ein Messerhaltekörper (13), der das Schneidelement (3) trägt, befestigt ist, wobei der Mikrotom-Einhängeabschnitt (6) angeordnet ist, um verschiedene Arten von Mikrotomen einzuhängen,
- die Vorrichtung (1) ferner eine Reinigungsvorrichtung (11) mit einer Düse (12) umfasst, die konfiguriert ist, um während der Schneidvorgänge anfallendes Abfallmaterial des Einbettmaterials in Echtzeit zu entfernen, während die aufeinanderfolgenden Bilder aufgenommen werden, ohne das Sichtfeld der Kamera (8) zu beeinträchtigen,
- die elektronische Verarbeitungs- und Steuergruppe (E) auch konfiguriert ist, um die Reinigungsvorrichtung (11) automatisch zu steuern,
- die Düse (12) über den Messerhaltekörper (13) hinausragt und zum Schneidelement (3) hin ausgerichtet ist, dem Block aus Einbettmaterial (B) zugewandt,
- die Düse (12) sich somit in einer festen Position dem Schneidelement (3) zugewandt befindet, auf einer geringeren Höhe als die der Kamera (8) und des Blocks (B), wenn dieser sich in der höchsten Position seiner zyklischen Trajektorie befindet, um nicht in Bezug auf den Platzbedarf mit dem Schneiden und mit der Bildaufnahme zu interferieren.

2. Vorrichtung (1) nach Anspruch 1, wobei das Schneidelement (3) eine schräge Ebene umfasst, die frontal in Bezug auf das Halteelement (4) positioniert ist, um die geschnittenen Schnittabschnitte in eine gewünschte Richtung zu führen.

3. Vorrichtung (1) nach Anspruch 1 oder 2, umfassend einen Mehrachsen-Manipulatorroboter zur Automatisierung des Vorgangs des Einsetzens des Blocks aus Einbettmaterial (B) auf das Halteelement (4).

4. Vorrichtung (1) nach einem der vorhergehenden Ansprüche, umfassend einen fotoelektrischen Näherungssensor (7), der angeordnet ist, um zu erfassen, ob der Block aus Einbettmaterial (B) sich in einer proximalen Entfernung in Bezug auf das Schneidelement (3) befindet, insbesondere kleiner als 100 Mikrometer, und ein digitales Bestätigungssignal hierüber zu senden.

5. Vorrichtung (1) nach Anspruch 1, wobei die Kamera (8) oberhalb eines Halteabschnitts (9) montiert ist, der mit einem Kühlkörper versehen ist, um eine unerwünschte Erwärmung der Kamera (8) zu verhindern.

6. Vorrichtung (1) nach Anspruch 5, wobei der Halteabschnitt (9) starr mit dem Mikrotom-Einhängeabschnitt (6) an einem distalen Ende in Bezug auf die Position der Kamera (8) verbunden ist, sodass die Kamera (8) frontal in einem vorbestimmten festen Abstand in Bezug auf das Mikrotom und den Block aus Einbettmaterial (B) positioniert ist.

7. Vorrichtung (1) nach Anspruch 1 oder 5 oder 6, wobei der Sensor (10) von einer Halterstange (19) getragen wird, die an einem unteren Ende mit dem Messerhaltekörper (13) gekoppelt ist, wobei die Halterstange (19) und der Sensor (10) sich entlang einer Seite des Halteelements (4) und des Blocks (B) erstrecken.

8. Vorrichtung (1) nach einem der vorhergehenden Ansprüche, wobei das Halteelement (4) angeordnet ist, um eine zyklische Schneidtrajektorie von unten nach oben und umgekehrt auszuführen, wobei der Sensor (10) auf einer bestimmten Höhe angeordnet ist, die der höchsten Position der zyklischen Trajektorie des Halteelements (4) entspricht.

9. Vorrichtung (1) nach einem der vorhergehenden Ansprüche, wobei die Düse (12) zum Schneidelement (3) hin ausgerichtet ist, dem Block aus Einbettmaterial (B) zugewandt, und mit einer externen Vakuumleitung (14) verbunden ist, um die Entfernung des Abfallmaterials des Einbettmaterials in Echtzeit während des Schneidens zu ermöglichen.

10. Vorrichtung (1) nach Anspruch 9, umfassend einen Drucksensor (15), der der Düse (12) zugeordnet ist und angeordnet ist, um auszuwerten, dass das erzeugte Vakuum konstant bleibt und nicht durch eine Ansammlung von Abfallmaterial in der Vakuumleitung (14) beeinflusst wird.

11. Vorrichtung (1) nach Anspruch 5, umfassend ein Beleuchtungssystem (16), das der Kamera (8) zugeordnet ist und angeordnet ist, um die Konturen und Formen des in dem Block (B) eingebetteten Gewebes hervorzuheben, um die nachfolgende Verarbeitung der aufgenommenen Bilder zu erleichtern.

12. Vorrichtung (1) nach Anspruch 11, wobei das Beleuchtungssystem (16) eine Lichtquelle (17) umfasst, die von einem Haltearm (18) auskragend getragen wird, der mit dem Halteabschnitt (9) an einem distalen Ende in Bezug auf die Lichtquelle (17) verbunden ist.

13. Vorrichtung (1) nach einem der vorhergehenden Ansprüche, umfassend eine Mensch-Maschine-Schnittstelleneinrichtung, die angeordnet ist, um verschiedene Betriebsschritte der Vorrichtung (1) zu überwachen und zu steuern.

14. Vorrichtung (1) nach einem der vorhergehenden Ansprüche, wobei die elektronische Verarbeitungs- und Steuergruppe (E) konfiguriert und programmiert ist, um automatische Algorithmen auszuführen, die in der Lage sind, das aufgenommene digitale Bild des Blocks aus Einbettmaterial (B) zu analysieren.

15. Vorrichtung (1) nach Anspruch 14, wobei die automatischen Algorithmen konfiguriert sind, um den Schritt der Segmentierung relevanter Teile jedes Bildes durchzuführen und Abschnitte von biologischem Gewebe von Interesse in einen Analysedatensatz zu platzieren.

16. Vorrichtung (1) nach Anspruch 15, wobei die automatischen Algorithmen konfiguriert sind, um das digitale Bild des Blocks (B) und jedes extrahierten Gewebeabschnitts zu verarbeiten, um zu prüfen, ob die Schnittbedingung vorliegt oder ob noch die Trimming-Bedingung vorliegt, wobei die Identifikation der Schnitt- und Trimming-Bedingung auf einem Faltungsneuronalen Netzwerk zur Klassifizierung basiert, das angeordnet ist, um die Merkmale zu erlernen, die die Schnitt- und Trimming-Bedingungen der Blöcke unterscheiden.

17. Verfahren zur automatisierten Verarbeitung eines in einem Block aus Einbettmaterial (B) eingebetteten biologischen Gewebes, insbesondere zur automatischen Erkennung des Endes des Trimmvorgangs, wobei das Verfahren die folgenden Schritte umfasst:
- Bereitstellen einer Vorrichtung (1) nach einem der vorhergehenden Ansprüche,
- Aufnehmen einer Vielzahl von Bildern mittels der Kamera (8) bezüglich des Zustands des Blocks aus Einbettmaterial (8) während der Schneidvorgänge, wobei jedes Bild nach dem Schneiden eines Schnittabschnitts aufgenommen wird,
- Entfernen von Abfallmaterial des Einbettmaterials, das während der Schneidvorgänge anfällt, in Echtzeit, während die aufeinanderfolgenden Bilder aufgenommen werden,
- Verarbeiten jedes aufgenommenen Bildes in Echtzeit, um zu prüfen, ob eine Trimming-Bedingung vorliegt, sodass das Mikrotom Schnittabschnitte schneidet, die nur aus Einbettmaterial bestehen, oder ob eine Schnittbedingung für biologisches Gewebe vorliegt, sodass das Schneidelement (3) mit dem in dem Block (B) eingebetteten biologischen Gewebe in Kontakt kommt und Schnittabschnitte erzeugt, die Abschnitte biologischen Gewebes umfassen,
- Aktivieren eines Stoppsignals, um die Schnittvorgänge automatisch zu stoppen, wenn die Schnittbedingung für mindestens zwei aufeinanderfolgende verarbeitete Bilder identifiziert wurde.

18. Verfahren nach Anspruch 17, wobei der Schritt der Verarbeitung jedes Bildes in Echtzeit umfasst:
- Segmentieren relevanter Teile jedes Bildes und Platzieren von Abschnitten von biologischem Gewebe von Interesse in einen Analysedatensatz,
- Verarbeiten des digitalen Bildes des Blocks (B) und jedes extrahierten Gewebeabschnitts, um zu prüfen, ob die Schnittbedingung vorliegt oder ob noch die Trimming-Bedingung vorliegt, wobei die Identifikation der Schnitt- und Trimming-Bedingung auf einem Faltungsneuronalen Netzwerk zur Klassifizierung basiert, das angeordnet ist, um die Merkmale zu erlernen, die die Schnitt- und Trimming-Bedingungen des Blocks (B) unterscheiden.

## Revendications

1. Dispositif (1) pour traiter de manière automatisée un tissu biologique inclus dans un bloc de matériau de confinement (B), en particulier pour reconnaître automatiquement la fin d'une étape de rognage dudit tissu biologique inclus dans ledit bloc de matériau de confinement (B), dans lequel ledit dispositif (1) comprend:
- un instrument (2) muni d'un élément de coupe (3), en particulier un microtome agencé pour sectionner le tissu biologique inclus dans le bloc de matériau de confinement (B) et réaliser des portions de coupe dudit tissu biologique, dans lequel ledit microtome comprend un élément de support (4) pour bloquer en place le bloc (B) à sectionner, dans lequel ledit élément de support (4) est mobile par rapport à l'élément de coupe (3) selon une trajectoire cyclique pour former une pluralité desdites portions de coupe,
- au moins une caméra (8) agencée pour acquérir une pluralité d'images relatives à l'état du bloc de matériau de confinement (B) pendant les opérations de coupe,
- au moins un capteur (10) agencé pour détecter la position dudit élément de support (4) ou dudit élément de coupe (3) par rapport à l'autre pendant la trajectoire cyclique, et pour envoyer un signal d'activation de la caméra (8) pour acquérir une image après la coupe de chaque portion de coupe, afin de surveiller en continu l'état du bloc de matériau de confinement (B) en acquérant une pluralité d'images consécutives, chacune après la coupe d'une portion de coupe,
- un groupe électronique de traitement et de commande (E) configuré pour commander automatiquement ledit au moins un capteur (10) apte à activer la caméra (8),
- ledit groupe électronique de traitement et de commande (E) étant configuré et programmé pour:
- traiter en temps réel chaque image acquise pour vérifier s'il existe une condition de rognage, de sorte que le microtome coupe des portions de coupe constituées uniquement de matériau de confinement ou s'il existe une condition de sectionnement de tissu biologique, de sorte que l'élément de coupe (3) entre en contact avec le tissu biologique inclus dans le bloc (B) créant des portions de coupe comprenant des portions de tissu biologique,
- activer un signal d'arrêt pour arrêter automatiquement les opérations de sectionnement si la condition de sectionnement a été identifiée pour au moins deux images traitées consécutives,
**caractérisé en ce que**:
- le dispositif (1) comprend une partie d'accrochage de microtome (6) au-dessus de laquelle est fixé un corps porte-lame (13) portant ledit élément de coupe (3), dans lequel ladite partie d'accrochage de microtome (6) est agencée pour accrocher différents types de microtomes,
- le dispositif (1) comprend en outre un dispositif de nettoyage (11) ayant une buse (12) configurée pour éliminer en temps réel les déchets de matériau de confinement générés pendant les opérations de coupe, tandis que les images consécutives sont acquises, sans interférer avec le champ de vision de la caméra (8),
- le groupe électronique de traitement et de commande (E) est également configuré pour commander automatiquement ledit dispositif de nettoyage (11),
- la buse (12) fait saillie au-dessus du corps porte-lame (13) et est orientée vers l'élément de coupe (3), faisant face au bloc de matériau de confinement (B),
- la buse (12) est ainsi dans une position fixe faisant face à l'élément de coupe (3), à une hauteur inférieure à celle de la caméra (8) et du bloc (B) lorsqu'il est dans la position la plus haute de sa trajectoire cyclique, de manière à ne pas interférer en termes d'encombrement avec la coupe et avec l'acquisition de l'image.

2. Dispositif (1) selon la revendication 1, dans lequel l'élément de coupe (3) comprend un plan incliné positionné frontalement par rapport à l'élément de support (4), apte à guider les portions de coupe coupées vers une direction souhaitée.

3. Dispositif (1) selon la revendication 1 ou 2, comprenant un robot manipulateur multi-axes pour automatiser l'opération d'insertion du bloc de matériau de confinement (B) sur l'élément de support (4).

4. Dispositif (1) selon l'une quelconque des revendications précédentes, comprenant un capteur de proximité photodélectrique (7) agencé pour détecter si le bloc de matériau de confinement (B) est à une distance proximale par rapport à l'élément de coupe (3), en particulier inférieure à 100 micromètres, et pour envoyer un signal de confirmation numérique à ce sujet.

5. Dispositif (1) selon la revendication 1, dans lequel ladite caméra (8) est montée au-dessus d'une partie de support (9) munie d'un dissipateur thermique pour empêcher un échauffement indésirable de la caméra (8).

6. Dispositif (1) selon la revendication 5, dans lequel ladite partie de support (9) est rigidement connectée à la partie d'accrochage de microtome (6) à une extrémité distale par rapport à la position de la caméra (8), de sorte que la caméra (8) est positionnée frontalement à une distance fixe prédéterminée par rapport au microtome et au bloc de matériau de confinement (B).

7. Dispositif (1) selon la revendication 1 ou 5 ou 6, dans lequel ledit capteur (10) est porté par une tige de support (19) couplée à une extrémité inférieure avec le corps porte-lame (13), dans lequel la tige de support (19) et le capteur (10) s'étendent le long d'un côté de l'élément de support (4) et du bloc (B).

8. Dispositif (1) selon l'une quelconque des revendications précédentes, dans lequel ledit élément de support (4) est agencé pour effectuer une trajectoire de coupe cyclique de bas en haut et vice versa, dans lequel le capteur (10) est agencé à une hauteur donnée correspondant à la position la plus haute de la trajectoire cyclique de l'élément de support (4).

9. Dispositif (1) selon l'une quelconque des revendications précédentes, dans lequel la buse (12) est orientée vers l'élément de coupe (3), faisant face au bloc de matériau de confinement (B), et est connectée à une ligne de vide externe (14) pour permettre l'élimination en temps réel des déchets de matériau de confinement, pendant la coupe.

10. Dispositif (1) selon la revendication 9, comprenant un capteur de pression (15) associé à la buse (12), agencé pour évaluer que le vide généré reste constant et n'est pas influencé par une accumulation de déchets dans la ligne de vide (14).

11. Dispositif (1) selon la revendication 5, comprenant un système d'éclairage (16) associé à la caméra (8), agencé pour mettre en évidence les contours et les formes du tissu inclus dans le bloc (B), afin de faciliter le traitement ultérieur des images acquises.

12. Dispositif (1) selon la revendication 11, dans lequel le système d'éclairage (16) comprend une source lumineuse (17) en porte-à-faux par un bras de support (18) connecté à la partie de support (9) à une extrémité distale par rapport à la source lumineuse (17).

13. Dispositif (1) selon l'une quelconque des revendications précédentes, comprenant un dispositif d'interface homme-machine agencé pour surveiller et contrôler différentes étapes opérationnelles du dispositif (1).

14. Dispositif (1) selon l'une quelconque des revendications précédentes, dans lequel ledit groupe électronique de traitement et de commande (E) est configuré et programmé pour exécuter des algorithmes automatiques aptes à analyser l'image numérique acquise du bloc de matériau de confinement (B).

15. Dispositif (1) selon la revendication 14, dans lequel lesdits algorithmes automatiques sont configurés pour effectuer l'étape de segmentation des parties pertinentes de chaque image, et pour placer des portions de tissu biologique d'intérêt dans un ensemble d'analyse.

16. Dispositif (1) selon la revendication 15, dans lequel lesdits algorithmes automatiques sont configurés pour traiter l'image numérique du bloc (B) et chaque portion de tissu extraite, pour vérifier s'il existe la condition de sectionnement ou s'il existe encore la condition de rognage, dans lequel l'identification du sectionnement et du rognage est basée sur un réseau neuronal convolutif pour la classification, agencé pour apprendre les caractéristiques qui distinguent les conditions de sectionnement et de rognage des blocs.

17. Procédé pour traiter de manière automatisée un tissu biologique inclus dans un bloc de matériau de confinement (B), en particulier pour reconnaître automatiquement la fin de l'étape de rognage, ledit procédé comprenant les étapes suivantes:
- fournir un appareil (1) selon l'une quelconque des revendications précédentes,
- acquérir une pluralité d'images au moyen de ladite caméra (8) relatives à l'état du bloc de matériau de confinement (B) pendant les opérations de coupe, chaque image étant acquise après la coupe d'une portion de coupe,
- éliminer en temps réel les déchets de matériau de confinement générés pendant les opérations de coupe, tandis que les images consécutives sont acquises,
- traiter en temps réel chaque image acquise pour vérifier s'il existe une condition de rognage, de sorte que le microtome coupe des portions de coupe constituées uniquement de matériau de confinement ou s'il existe une condition de sectionnement de tissu biologique, de sorte que l'élément de coupe (3) entre en contact avec le tissu biologique inclus dans le bloc (B) créant des portions de coupe comprenant des portions de tissu biologique,
- activer un signal d'arrêt pour arrêter automatiquement les opérations de sectionnement si la condition de sectionnement a été identifiée pour au moins deux images traitées consécutives.

18. Procédé selon la revendication 17, dans lequel l'étape de traitement en temps réel de chaque image comprend:
- segmenter les parties pertinentes de chaque image et placer des portions de tissu biologique d'intérêt dans un ensemble d'analyse,
- traiter l'image numérique du bloc (B) et chaque portion de tissu extraite, pour vérifier s'il existe la condition de sectionnement ou s'il existe encore la condition de rognage, dans lequel l'identification du sectionnement et du rognage est basée sur un réseau neuronal convolutif pour la classification, agencé pour apprendre les caractéristiques qui distinguent les conditions de sectionnement et de rognage du bloc (B).
